# EUROPEAN PATENT APPLICATION

(11) **EP 2 607 106 A2**
(43) Date of publication of application: **26.06.2013**
(21) Application number: 12198516.2
(22) Date of filing: 20.12.2012
(51) Int. Cl.: B60C 19/00, B60C 13/00

(54) **Tire with label and relief groove and tire mold**

(30) Priority: 22.12.2011 US 201161579245 P; 07.12.2012 US 201213708271
(71) Applicant: The Goodyear Tire & Rubber Company, Akron, OH 44316-0001 (US)
(72) Inventor: Lonkar, Satyajit Avinash, Broadview Heights, OH Ohio 44147 (US); Van Rieper, Philip Carl, Cuyahoga Falls, OH Ohio 44223 (US); Du, Mingliang, Copley, OH Ohio 44321 (US); Kirugulige, Madhusudhana Srinivasa Rao, Akron, OH Ohio 44313 (US); Bucher, Frank, D-54329 Konz (DE); Edson, Matthew Jared, Copley, OH Ohio 44321 (US)
(74) Representative: Kutsch, Bernd

(57) **Abstract**

A pneumatic tire comprising a tread and a sidewall (14) is disclosed. The sidewall (14) has a flat label region and one or more grooves or rims (53) surrounding the flat label region. Also, a tire mold comprising a sidewall plate is disclosed. The sidewall plate has an inner mold surface for molding a sidewall (14) of a tire. The inner mold surface includes a label region and one or more grooves or rims surrounding the label region.

## Description

### Field of the Invention

The invention relates in general to rubber articles and more particularly to tires and molds for making tires.

### Background of the Invention

Pneumatic tires often desirably have indicial markings commonly known as labels located on the sidewalls of the tire. The tire labels typically include information such as trademarks or other markings. These indicia typically are formed directly into the rubber sidewall during the tire molding process. Thus, the indicia may be raised lettering or other shapes, and may be colored with white pigments or other colorants in the rubber compound. The current trend is to mold the label into the tire sidewall. The label is formed of the black tire sidewall, and is visible to the eye due to the use of different patterns of molded ridges. The letters or other indicia typically have a different angle or pattern of ridges so that a consumer can read the label. See for example, see US-5,645,661.

Tires having other types of appliques on the sidewalls thereof, such as lettering, logos, decals, or bar codes and the like, are also very popular. It is known in the prior art to apply stickers or decals to the tire sidewall after the tire has been cured. However, due to the repeated cyclic deformation of the tire sidewall, the decals generally fall off due to inadequate adhesion. Further, if the tires contact a curb, or other surface, the decals will be rubbed or scraped off.

It has also been proposed to replace the previously known sidewall decorative features with appliques which are painted onto conventional black wall tires. However, painting designs on to the sidewall of tires has not proven to be a satisfactory answer to the problem. This is largely due to the fact that designs which are painted on are quite thin and are damaged by the repeated flexing of the sidewalls.

It would, therefore, be desirable to have a tire with indicia applied to a cured tire sidewall surface, wherein the indicial coating material offers good adhesion and durability.

### Summary of the Invention

The present invention provides a pneumatic tire in accordance with claim 1 and a mold in accordance with claim 14.

Dependent claims refer to preferred embodiments of the invention.

### Brief Description of the Drawings

FIG. 1 is a perspective view of a partial section of a sidewall of a tire illustrating an exemplary label.
FIG. 2a is a partial view of a tire mold showing the tire label mounted in the sidewall forming section of the tire mold;
FIG. 2b is a front view of a tire sidewall plate showing the position of the tire label mold with respect to the sidewall;
FIG. 2c is perspective view of the tire mold and the corresponding tire label and sidewall formed by the mold;
Fig. 3 is a perspective view of the back side of a label having grooves.
Fig. 4 is a perspective view of a portion of a sidewall of a tire showing a raised flat pad with a stress relief groove.
Fig. 5 is a perspective view of a portion of a sidewall of a tire showing a raised flat pad with a tire decal applied post cure, wherein the flat pad is surrounded by a stress relief groove.

### Detailed Description of the Invention

The present invention relates to a label for a pneumatic tire. The pneumatic tire may comprise any vehicle tire such as a passenger tire; light, medium or heavy truck tire, off-the-road tire, farm tire, mining tire, aircraft tire, or motorcycle tire. The vehicle tire may also be a non-pneumatic tire, a bicycle tires or a tire for toy articles. In an alternative embodiment, the label may be used for a rubber article, such as a door mat or a car mat.

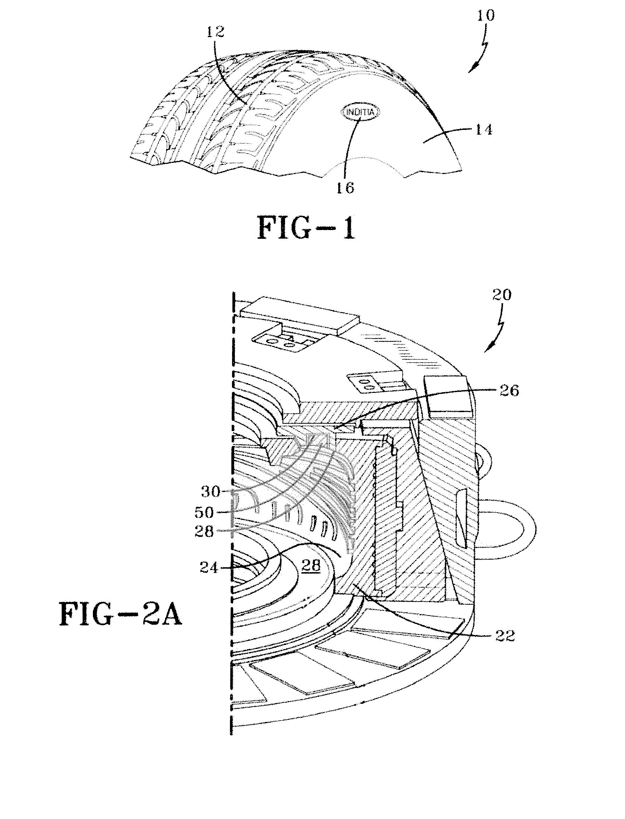

Figure 1 illustrates a portion of a tire 10 having a tire tread 12 and a tire sidewall 14. The tire further comprises a tire label 16 mounted on the sidewall. The tire label may have alpha numeric characters and the shape of the label may be in any desired size, shape or color, such as lettering, trademark figures or logos, and the like. The indicia may also be in the shape or pattern of a sidewall stripe or stripes, such as for a white sidewall. Also envisioned as indicia are decorative markings, such as artistic designs, symbols, flowers, dots, short parallel and/or angled stripes or hash marks, or any other shapes as are desired by the user of the tire. The size of the label may be any desired size, and may also include the entire surface of the sidewall of the tire.

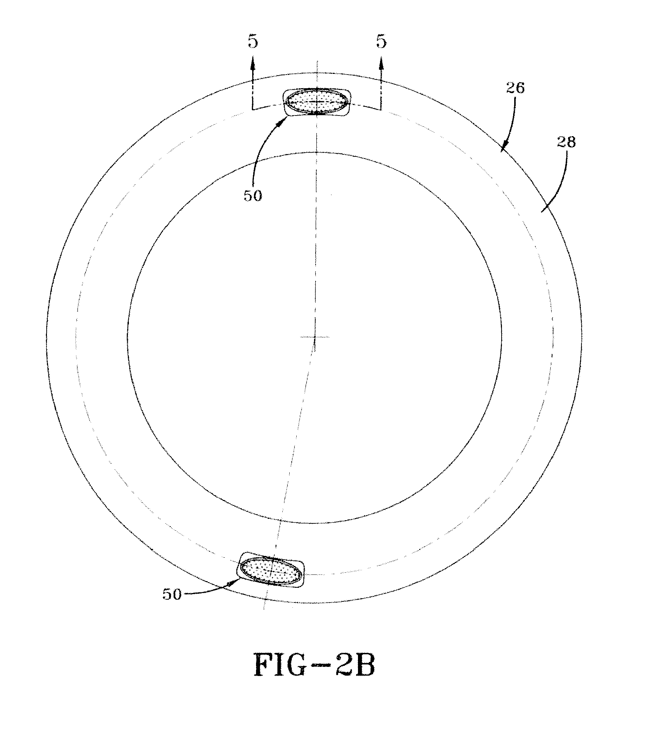

Figure 2A illustrates a typical mold 20 used for molding a green tire. The mold assembly 20 typically comprises a plurality of segments 22 which are arranged to form an annular ring to encircle the tread of a green tire when the segments are assembled together. The outer tread surface of a tire is formed by the inner molding surface 24 of the segments 22, which have a plurality of lands and grooves to mold the tread pattern into the green tire. The mold segments 22 may be radially movable to allow assembly and disassembly of the mold about a green tire.

The mold assembly 10 further comprises a sidewall plate 26 for molding the sidewalls 14 of the tire. The sidewall plate 26 has an inner mold surface 28 for molding the tire sidewall, and joins with the segments to form a smooth continuous surface from the tire tread to the sidewall. The sidewall plate 26 further comprises an inner cavity 30 for receiving a label mold 50, as described in more detail, below.

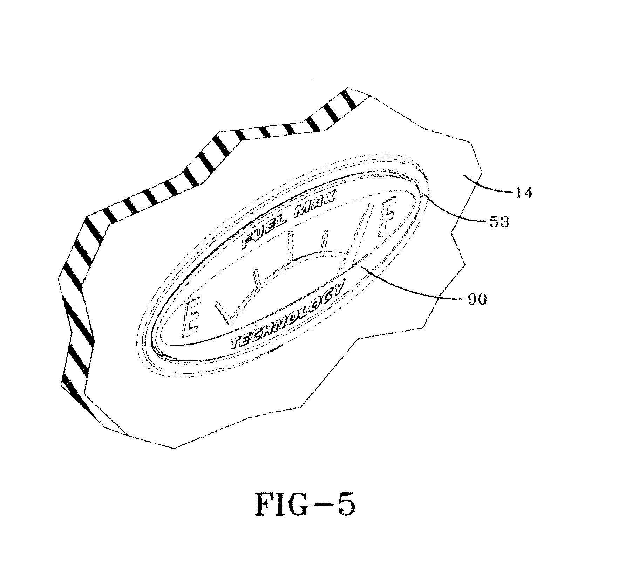

The label mold 50 molds a first surface layer 52 on the sidewall of the tire. The first surface layer 52 is shown in this example to be slightly raised from the surface of the tire sidewall, although not required. The first surface layer may be recessed (not shown) or flush with the sidewall of the tire (Fig. 5). An optional raised rim 53 may encircle the first surface layer 52 to define the label region 52. One or more grooves 70 encircles the first surface layer 52 and functions to provide strain relief. If there is more than one groove 70, the grooves may be concentric.

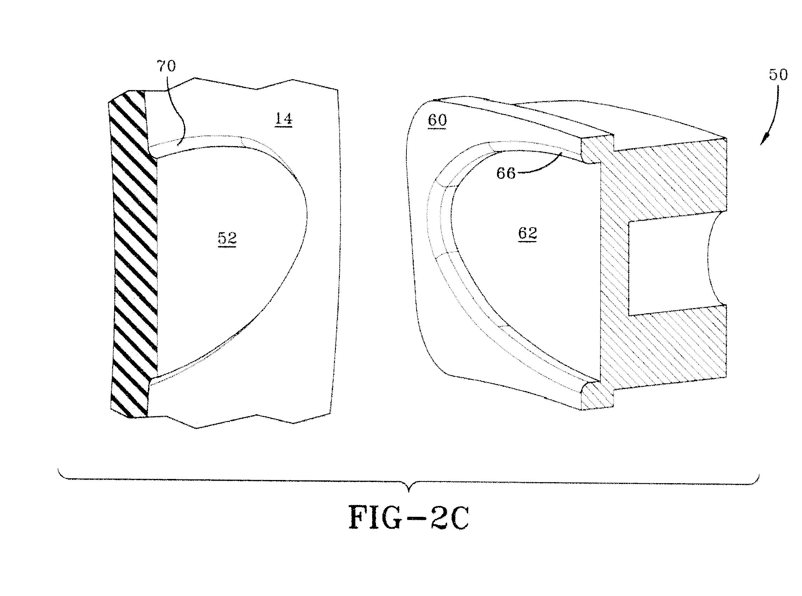

The label mold 50 forms the label region 52 including the first surface layer 52, and the one or more grooves 70and the optional raised rim 53. The label mold 50 is shown in Fig. 2C, and has an outer surface 60 that is to be located adjacent the outer sidewall surface of a green tire. The outer surface further comprises a recessed portion 62 that forms the raised label region 52 on the tire. The recessed portion 62 is encircled by a raised ridge 66 that forms the recessed groove 70 on the green tire sidewall.

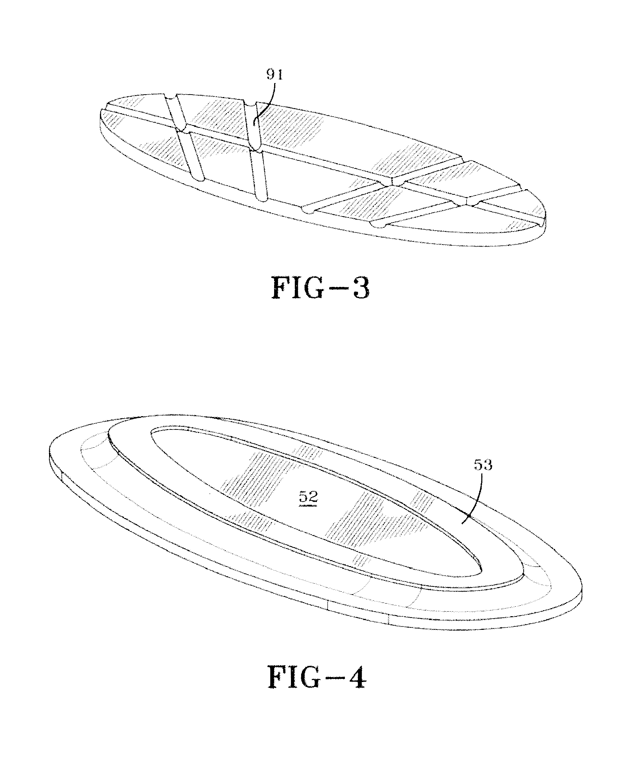

Figure 4 illustrates a portion of a tire sidewall that has been cured in the tire mold. The tire sidewall has a raised first surface layer 52 molded into the tire sidewall. An optional raised rim 53 encircles the first surface layer 52. Figure 5 illustrates a decorative label 90 affixed to the label region. The decorative label 90 is affixed post cure to the label regions described above using a rubber adhesive.

The decorative label 90 may have an outer visible layer 92 formed of a polymer such as a flexible polyvinyl chloride layer (PVC). The outer visible layer is bonded to a rubber or fabric backing. As shown in Figure 3, the rubber or fabric backing of the decorative label 90 preferably has a plurality of grooves 91 which provide a reduction in strain. The fabric or rubber backing is affixed to the label region 52 post cure using a suitable adhesive. Suitable adhesives include those formed from or based upon cyanoacrylate adhesive, urethane, epoxy, polyvinyl alcohol, acrylate, methacrylate, polyvinyl chloride, polyester and the like.

## Claims

1. A tire comprising a tread (12) and a sidewall (14), the sidewall (14) having a flat label region and one or more grooves or rims (53) surrounding the flat label region.

2. The tire of claim 1 wherein the flat label region is recessed from the sidewall surface.

3. The tire of claim 1 wherein the flat label region is raised from the sidewall surface.

4. The tire of at least one of the previous claims wherein a label (16) is mounted on the flat label region.

5. The tire of claim 4 wherein the label (16) is formed of polyvinyl chloride or comprises polyvinyl chloride.

6. The tire of claim 4 or 5 wherein the label (16) is colored.

7. The tire of at least one of the previous claims wherein the one or more grooves or rims (53) are a plurality of concentric grooves.

8. The tire of at least one of the previous claims wherein the one or more grooves or rims (53) are a plurality of concentric rims.

9. The tire of at least one of the previous claims wherein the label (16) comprises an outer visible layer and a rubber or fabric backing bonded to the outer visible layer, and wherein the rubber or fabric backing is bonded to the sidewall (14).

10. The tire of claim 9 wherein the rubber of fabric backing is bonded to the sidewall by an adhesive.

11. The tire of claim 9 or 10 wherein the rubber of fabric backing is bonded to the sidewall after curing the tire.

12. The tire of at least one of the previous claims, wherein the rubber of fabric backing of the label (16) comprises one or more grooves (91).

13. The tire of at least one of the previous claims, wherein the tire is a pneumatic tire.

14. A tire mold comprising a sidewall plate (26), the sidewall plate (26) having an inner mold surface (28) for molding a sidewall (14) of a tire (10), the inner mold surface (28) including a label region and one or more grooves or rims surrounding the label region.

15. The tire mold of claim 14 wherein the label region comprises an inner cavity (30) for receiving a label mold (50).
